(19) Europäisches Patentamt
European Patent Office
Office européen des brevets

(11) Publication number: **0 448 341 B1**

(12) # EUROPEAN PATENT SPECIFICATION

(45) Date of publication of patent specification: **07.06.95**

(51) Int. Cl.$^6$: **C09D 201/02**

(21) Application number: **91302347.9**

(22) Date of filing: **19.03.91**

(54) **Coating composition for precoated metal material.**

(30) Priority: **19.03.90 JP 67264/90**

(43) Date of publication of application:
**25.09.91 Bulletin 91/39**

(45) Publication of the grant of the patent:
**07.06.95 Bulletin 95/23**

(84) Designated Contracting States:
**BE DE ES FR GB**

(56) References cited:
**EP-A- 0 380 024**
**US-A- 4 783 247**
**US-A- 4 908 273**

**DATABASE WPIL, no. 82-27 510, 26-02-1991, DERWENT PUBLICATIONS LTD. London, GB & JP-A-27-035 973**

(73) Proprietor: **NIPPON PAINT CO., LTD.**
**1-2, Oyodokita 2-chome**
**Kita-ku**
**Osaka-shi**
**Osaka 572 (JP)**

(72) Inventor: **Takimoto, Masaaki**
**842-66, Ooazakishiwada**
**Kadoma-shi,**
**Osaka 571 (JP)**
Inventor: **Yoshida, Yuichi**
**26-7, Hashimotoshinseki**
**Yawata-shi,**
**Kyoto 614 (JP)**
Inventor: **Takano, Shizuo**
**4-25-1, Kishibekita**
**Suita-shi,**
**Osaka 564 (JP)**
Inventor: **Usuki, Kazuhiko**
**2-13-26, Tamagawa,**
**Fukushima-ku**
**Osaka-shi,**
**Osaka 553 (JP)**

(74) Representative: **Geering, Keith Edwin et al**
**REDDIE & GROSE**
**16 Theobalds Road**
**London WC1X 8PL (GB)**

EP 0 448 341 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### BACKGROUND OF THE INVENTION

The present invention relates to a coating composition for precoated metal material excellent in electrodeposition coating performance, possessing high corrosion-resistance and high processing adhesion, and capable of forming a coating film applicable to spot welding.

Precoated metal materials are increasingly used in the fields of automobiles, steel furniture and electric household appliances in recent years in order to increase the productivity. In the field of surface treatment and painting, to meet such demand, coating compositions for various precoated metal materials (for example, rust-preventive coated metal materials) have been developed.

For example, in the Japanese Official Patent Gazette, Showa 45-2430 and 47-6882, zinc-rich paints were disclosed. In the Japanese Official Patent Gazette, Showa 52-44569, Japanese Official Provisional Publication, Showa 58-138758 and 51-79138, and Japanese Official Patent Gazette, Showa 58-19706, electroconductive pigment-blending paints for application in electrodeposition painting were disclosed. As the electroconductive pigment, relatively large particles (mean particle size 1 μm or more) of zinc and other metal powder, metallic carbide powder, metallic phosphide powder, etc. are used. Furthermore, in the Japanese Official Patent Provisional Publication, Showa 60-197773, 60-199074, 58-224174, and 60-174879, organic compound silicate film and its coated steel plate were disclosed. This organic compound silicate film does not contain electroconductive pigment, and is a thin film of 0.3 to 3 μm, which is applicable to electrodeposition painting.

In the conventional coating composition for precoated metal material, however, the performance was not enough to satisfy all quality requirements such as press forming, electrodeposition painting, and spot welding for coated steel plates.

More specifically, in the zinc-rich paint, although electrodeposition painting is possible, press processing performance is insufficient. In the paint containing the electroconductive pigment, the corrosion-resistance is notably improved and weldability is enhanced, but since relatively large particles of the electroconductive pigment are contained, uneven irregularities are significant on the surface of electrodeposition coat film formed on the coat film of this paint, and the press processing performance is not enough, and applicable positions were limited. The organic compound silicate film is improved in the corrosion-resistance, weldability and press processing performance, but it involves the problems of uneven irregularities of the electrodeposition coating film, and especially corresponding to the variation of thickness of the organic compound silicate film, the skin of the electrodeposition coating film formed thereon varies significantly.

Thus, the hitherto proposed paint compositions are insufficient for the coated steel plates of high quality required at the present, and often involve problems in the smoothness of electrodeposition coating film and the adhesion of electrodeposition coat film in wet or corrosive environments.

To solve such problems, a paint composition was disclosed in the Japanese Official Patent Provisional Publication, Showa 62-28316. This paint composition is consisting essentially of an epoxy-based binder resin, a hydrophilic polyamide resin and silica particles, and the performance and quality of the film formed by it are sufficiently satisfactory. However, the polyamide resin used in this composition is very expensive, and moreover a special and expensive solvent is required for dissolving both the binder resin and polyamide resin (for example, N-methyl-2-pyrrolidone and benzyl alcohol). Still more, since the viscosity of the paint composition is high, it is difficult to delicately control the film thickness, which brings about difficulty in painting work. Although the polyamide resin may be also used as dispersion, the composition-manufacturing cost becomes very high in order to disperse finely.

GB 2,194,249 A discloses an organic multicoated steel sheet susceptible to cationic electrodeposition coating. The steel sheet has a zinc or zinc alloy plating over which is laid a sparely soluble chromate film and a film comprising an urethanated epoxy ester, a hydrophilic polyamide, silica particles and polyethylene wax.

### SUMMARY OF THE INVENTION

It is hence a primary object of the invention to present a coating composition for precoated metal material of low cost, excellent in electrodeposition coating performance (smoothness and adhesion in electrodeposition coating film) without using electroconductive pigment, possessing high corrosion-resistance and high press-processing performance, and capable of forming a coating film applicable to spot welding.

To achieve the above object, the coating composition for precoated metal material of the invention comprises, as essential ingredients, a binder resin possessing film forming capability, a hydrophilic resin for performing electrodeposition coating uniformly, and fine granular silica for enhancing corrosion-resistance, being dissolved or dispersed in an organic solvent, the coating composition being characterized by the binder resin having a number-average molecular weight of 600 to 100,000 and containing 25 or more mol% of an aromatic hydroxy compound in its constituent monomer and by the hydrophilic resin being a polyamine resin and/or polyimine resin having a number-average molecular weight of 600 to 100,000 and containing 25 or more mol% of an amine compound in the constituent monomer, the binder resin being at least one of the following (A1) to (A6):

(A1) An epoxy-based resin obtained by reaction of an epoxy resin (a1) with a secondary amine compound and not containing an epoxy group substantially;
(A2) Epoxy ester resin obtained by reaction of the epoxy resin (al) with a dicarboxylic acid (a2) in the presence or absence of an amine catalyst and substantially not containing an epoxy group;
(A3) Urethane resin out of the resins (A1) and/or (A2) obtained by reaction of a resin, in which a primary hydroxyl group is introduced by an alkanol amine compound possessing a primary hydroxyl group, with a partially blocked polyisocyanate compound;
(A4) Polyphenoxy resin;
(A5) Novolak type phenol resin;
(A6) Polyalkenylphenol resin;

the hydrophilic resin being at least one of the following (B11), (B12), (B13), (B21), (B22) and (B23), selected from:

(B11) Acrylic resin copolymer composed of 25 or more mol% of a monomer containing an amino group
(B12) Resin obtained by reaction of a multifunctional epoxy compound with a primary or secondary amine compound;
(B13) A polyethylene imine;
(B21) A polyamine graft resin obtained from further graft polymer ization of said (B11) with an $\alpha,\beta$-ethylenic unsaturated monomer;
(B22) Polyamine graft resin obtained by grafting onto said (B11) a resin having compatibility with the binder resin and/or a binder resin;
(B23) Polyamine graft resin obtained by grafting onto said (B12) a resin having compatibility with the binder resin and/or a binder resin;

the blending ratio of the hydrophilic resin in relation to the binder resin being 10-150:100 by weight and the blending ratio of the silica particles in relation to the binder resin being 5-150:100 by weight.

The present invention was completed in the following findings. That is, although it is required to blend a hydrophilic resin in order to achieve smoothness of the electrodeposition coating film, by using a specific polyamine and/or polyimine resin, formation of a film of high quality at low cost, low in viscosity and excellent in this film coatability may be possible even in the presence of fine granular silica. Furthermore, the fine granular silica is indispensable for enhancing corrosion-resistance of the film and the binder resin of high water-resistance is needed for improving the adhesion with the electrodeposition coating film.

The binder resin (A) used in the invention is required to possess a film forming ability and be soluble in an organic solvent, and from the viewpoint of storage stability of the composition, it is preferred to be unreactive with a hydrophilic resin. This binder resin (A) should be such as having a number-average molecular weight of 600 to 100,000 with containing 25 or more mol% of aromatic hydroxy compound in its constituent monomer. If the aromatic hydroxy compound is less than 25 mol%, the resistance against water, corrosion, and chemicals of the formed film lowers. If the number-average molecular weight is less than 600, the resistance against water, corrosion, and chemicals of the formed film is not sufficient, and if exceeding 100,000, the solubility in an organic solvent lowers.

Such a binder resin (A) may be obtained, for example, by the reaction of 25 or more mol% of an aromatic hydroxy compound with other reactive compounds. As the reactive compound occupying the remainder of 0 up to 75 mol%, a monomer used in ordinary painting-resin manufacture may be used, such as epichlorohydrine, dicarboxylic acid, polyisocyanate, formaldehyde, and an amine compound etc.

Examples of the aromatic hydroxy compound include, among other, monovalent phenol, bivalent phenol, trivalent phenol, bisphenols, and their derivatives, and one or more compounds thereof are used. The aromatic hydroxy compound is introduced into the resin by that an OH group bound with an aromatic ring in condensed cyclic structures such as a benzene ring, naphthalene ring and anthracene ring is bound with other functional groups, for example, the introduction is carried out by formation of an ether bond or ester bond, or by reaction of another functional group on the aromatic ring such as a methylol group and a vinyl group.

Monovalent phenol and its derivatives may include, for example, phenol, cresol, thymol, carvacrol, and vinylphenol. Bivalent phenol and its derivatives may include, for example, pyrocatechin (catechol), resorcine, hydroquinone, orcinol, and urushiol. Trivalent phenol and its derivative may include, for example, pyrogallol, phloroglucinol, and hydroxyhydroquinone. Bisphenols and their derivatives are bisphenol A, bisphenol AD, and others.

The coating composition in this invention contains a specific hydrophilic resin in order to form a uniform and smooth coating film by electrodeposition painting on a film formed by this composition, and the binder resin (A) is required to have a particularly advanced resistance to water, so that its structure is limited, for example, as described above. In particular, since a polyamine and/or polyimine resin is used as the hydrophilic resin, when the binder resin (A) is produced by using an epoxy resin, it is required that the binder resin (A) does not contain any epoxy group substantially. This is because the epoxy group, if contained, reacts with a polyamine and/or polyimine resin. In the present specification, meanwhile, that the epoxy group is not contained substantially means that any characteristic absorption band due to the epoxy group is not observed by infrared spectral analysis.

Resins (A1) to (A6) are described below.

(A1) Resin obtained by reaction of an epoxy resin (a1) with a secondary amine compound and not containing an epoxy group substantially.

The reaction to obtain the resin (A1) is preferably performed by adding, if necessary, a solvent not reacting with an epoxy group or an amine, until the epoxy group actually disappears at a reaction temperature of 60 to 150°C. The solvent used in this reaction may be, for example, xylol, cellosolve acetate, methylethylketone, and cyclohexanon.

The epoxy resin (a1) is, for example, a bisphenol type epoxy resin, a resorcine type epoxy resin, or their mixed resin, which is expressed in the following chemical formula (1)

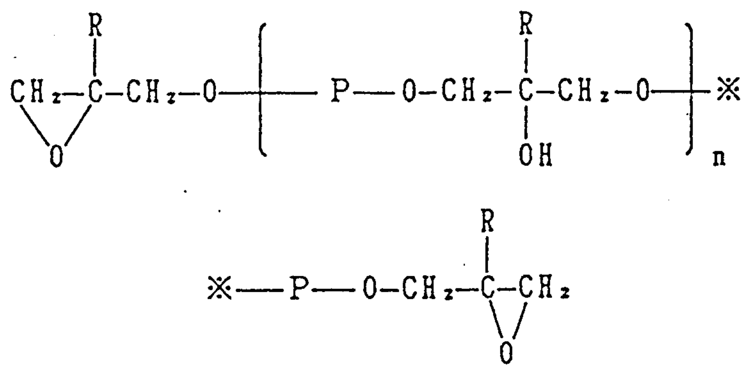

... ①

where P is

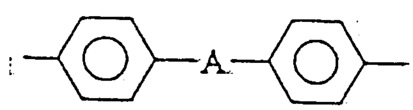 or 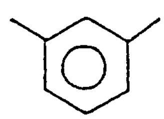

[where A is $-C(CH_3)_2-$, $-CH_2-$, -0-, $-SO_2$, or -S-]

R denotes H or $CH_3$, and n denotes an integer from 0 to 14. Commercial products of the epoxy resin (a1) include, for example, trade names Epototo YD-017, Epototo YD-014, Epototo YD-011, and Epototo YD-128 made by Toto chemical Co., and trade name Epichlon 4050 made by Dainippon Ink Chemical Industrial Co. The epoxy resin (a1) may be used either alone or in a combination of two or more types, and their 50 wt.% or less may be replaced by other epoxy resins (for example, polyalkylene glycol glycidyl ether having a number-average molecular weight of 300 to 100,000). When this replacement ratio exceeds 50 wt.%, the corrosion-resistance, water-resistance, adhesion, and resistance to chemicals tend to decline.

Examples of the secondary amine compound may include dialkylamine (diethylamine, dipropylamine, etc.), dialkanolamine (diethanolamine, dipropanolamine, etc.), and alkylalkanolamine (ethylethanolamine,

etc.). These compounds may be used by alone or in combination of two or more.

(A2) Epoxy ester resin obtained by reaction of the epoxy resin (al) with a dicarboxylic acid (a2) in the presence or absence of an amine catalyst and not containing an epoxy group substantially.

As the dicarboxylic acid (a2), a polymethylene dicarboxylic acid (adipic acid, azelaic acid, sebacic acid, etc.), an aromatic dicarboxylic acid (phthalic anhydride, phthalic acid, isophthalic acid, terephthalic acid, etc.), a dimeric acid, and others may be used. Preferably, a dicarboxylic acid having a molecular weight of 500 or less is cited and one or two or more kinds of these acids are presented for use. In particular, a polymethylene dicarboxylic acid is preferable from a viewpoint of processing ability, solubility and miscibility, and among them, the azelaic acid is most preferred. Together with such a dicarboxylic acid (a2), a trivalent carboxylic acid having molecular weight of 500 or less may be used in amounts of 100 wt.% or less against the dicarboxylic acid (a2). The trivalent carboxylic acid used here may be, for example, a tricarbarylic acid or a benzenetricarboxylic acid.

By reaction of an epoxy resin (a1) with a dicarboxylic acid (a2), this dicarboxylic acid (a2) is incorporated into a resin. At this time, for example, it is desired to use an amine catalyst. As this amine catalyst, in particular, a secondary amine (a3) possessing a primary hydroxyl group is favorably used, and it exhibits a catalytic action as well as the amine itself is incorporated into the resin, thereby an epoxy ester resin (A2) possessing a primary hydroxyl group is obtained.

As the secondary amine (a3), one type or two or more kinds may be used from a group of, for example, dialkanolamines (diethanolamine, dipropanolamine, dibutanolamine, etc.) and alkylalkanolamines (ethylethanolamine, etc.). In particular, the dialkanolamine is preferred, and especially diethanolamine is appropriate. As the amine catalyst, moreover, tertiary amines (triethylamine, tributylamine, etc.), or quaternary amines (tetramethylammonium chloride, tetrabutylammonium chloride, etc.) may be also used, and although in this case the primary hydroxyl group derived from the amine is not introduced in the resin same to a case where an amine catalyst is not used, a desired epoxy ester resin (A2) is obtained.

The epoxy resin (a1) and polyhydric carboxylic acid is desired to be blended so that the ratio of the gram equivalent of a glycidyl group in the epoxy resin (a1) to the gram equivalent of a carboxyl group in the polyhydric carboxylic acid [a dicarboxylic acid (a2) and a trivalent or higher carboxylic acid used as required] may be 1.1 - 1.4, or preferably 1.15 to 1.25, and it is desired to terminate the reaction so that the acid value of a reaction product of the epoxy resin (a1) with polyhydric carboxylic acid may be 2 [KOH mg/g] or less.

The reaction for obtaining the epoxy ester resin (A2) may be performed by, for example, melting or dissolving the epoxy resin (a1) in a proper unreactive solvent, adding a polyhydric carboxylic acid and an amine catalyst, and carrying out a reaction for 1 to 15 hours by heating at 80 to 200°C in an ordinary atmosphere or in an inert nitrogen gas atmosphere or the like as required, continuously until the epoxy group disappears substantially. By esterification of the epoxy resin (a1), the film flexibility is improved. The unreactive solvent used in this process may be, for example, xylol, cellosolve acetate, methylethylketone, and cyclohexane.

(A3) Urethane resin.

When an urethane resin (A3) is used as the binder resin (A), the adhesion with the ground surface of the coating film is improved outstandingly.

Of the above resin (A1) and/or (A2), the resin (a4) in which primary hydroxyl group is introduced from the alkanolamine compound possessing a primary hydroxyl group which undergoes reaction with a partially blocked polyisocyanate compound (b) to produce the resin (A3).

The alkanolamine compound possessing a primary hydroxyl group used in this reaction is, for example, dialkanolamines (diethanolamine, dipropanolamine, dibutanolamine, etc.), or alkylalkanolamines (ethylethanolamine, etc.). The resin (a4) is obtained, for example, as follows. That is, as the secondary amine compound for obtaining the resin (A1), or as the amine catalyst for obtaining the resin (A2), an alkanolamine compound possessing a primary hydroxyl group is used.

The partially blocked polyisocyanate compound (b) is obtained by reaction of polyisocyanate compound (b1) with a isocyanate protective agent (b2) at a ratio such that the ratio of the number of isocyanate groups of (b) to the number of active hydrogen groups of (b2) may be in a range of 1/5 to 5/4. This reaction is usually performed at a range of room temperature to 150°C without using solvent or by using an inert solvent. It is preferred from the viewpoint of quality of product [the partially blocked polyisocyanate compound (b)] and reaction control to perform the reaction by dissolving the inert solvent in the

polyisocyanate compound (b1), heating at 50 to 100 °C, dropping directly the isocyanate protective agent (b2) or dropping the solution having (b) dissolved in a proper inert solvent. The inert solvent used in this process is, for example, xylol or cellosolve acetate.

Examples of the polyisocyanate compound (b1) include, among others, aliphatic or alicyclic diisocyanate compounds (hexamethylene diisocyanate, hydrogenated diphenylmethane diisocyanate, isophorone diisocyanate, etc.), aromatic diisocyanate compounds (tolylene diisocyanate, diphenylmethane-4,4-diisocyanate, etc.), and triisocyanate compounds (an adduct of 1 mol of trimethylpropane with 3 mols of diisocyanate, a trimer of diisocyanates such as hexamethylene diisocyanate and tolylene diisocyanate, etc.).

As the polyisocyanate compound (b1), an aliphatic or alicyclic diisocyanate compound is preferred from the viewpoint of dissolution of a thermosetting resin, miscibility and processing ability.

The isocyanate protective agent (b2) must be such that an additive formed by adding to an isocyanate group of the polyisocyanate compound (b) be stable at ordinary temperature, and capable of regenerating a free isocyanate group by dissociating when the coating film is baked and dried. Such examples of the isocyanate protective agent (b2) are a lactam-protective agent ($\epsilon$-caprolactam, $\gamma$-butyrolactam,etc.), an oxime-protective agent (methylethylketoxime, cyclohexanoxime, etc.), an alcohol-protective agent (methanol, ethanol, isobutyl alcohol, etc.), a phenol-protective agent (phenol, p-tert-butylphenol, cresol, etc.), and a $\beta$-diketone-protective agent (acetoacetic ethyl, acetoacetic methyl, acetylacetone, dimethyl malonate, diethyl malonate, etc.), and one of them may be used by alone, or two or more compounds may be jointly used.

The urethane resin (A3) is preferably produced by reaction of the resin (a4), in which a primary hydroxyl group is introduced, with the partially blocked polyisocyanate compound (b). The fraction ratio in the reaction of this case should be so set that the ratio of the number of primary hydroxyl groups contained in (a4) to the number of free isocyanate groups contained in (b) be 10/1 to 10/8, or preferably 10/1 to 10/6. That is, if the ratio is greater than 10/1, curing property of the coating film may lower, or if the ratio is less than 10/8, it tends to convert into a gel when mixing all components of the coating composition. The reaction is done in an ordinary atmosphere, or if necessary, in an inert atmosphere, such as nitrogen gas, at a temperature range of 50 to 150 °C until the isocyanate group actually disappears. As the case may be, if isocyanate groups are remaining, the reaction may be stopped by adding, for example, a primary alcohol when the molecular weight reaches a desired value. In this case, that the isocyanate group is absent substantially means that characteristic absorption bands of an isocyanate group is not detected in infrared analysis.

(A4) Polyphenoxy resin.

The polyphenoxy resin (A4) is such as having generally a number-average molecular weight of about 8,000 to 100,000 and not containing an epoxy group substantially, which is obtained by polycondensation of anyone or two or more of a bivalent phenol and its derivatives, bisphenol and its derivatives with an epihalohydrine (e.g. epichlorohydrine), nearly in an equal mole quantity, in presence of a alkaline catalyst.

(A5) Novolak type phenol resin.

The novolak phenol resin (A5) is obtained by condensation of phenol with aldehyde (mainly, formaldehyde) in the presence of an acidic catalyst.

(A6) Polyalkenyl phenol resin.

The polyalkenyl phenol resin (A6) is obtained by polymerization of 25 or more mol% of an alkenyl phenol, such as vinylphenol, dimethylvinylphenol, isopropenylphenol and isobutenylphenol, with 0 up to 75 mol% of another $\alpha,\beta$-ethylene unsaturated monomer, by various methods of polymerization such as thermal polymerization, radical polymerization and cationic polymerization.

Among the resins (A1) - (A6); (A1), (A2), and (A3) are preferable, and especially (A3) is most preferred.

As the hydrophilic resin (B) in the present invention, polyamine resin and/or polyimine resin having a number-average molecular weight of 600 to 100,000 and containing 25 or more mol% of an amine compound in its constituent monomer is used. Such a polyamine and/or polyimine resin is obtained by reaction of a reactive compound containing 25 or more mol% of an amine compound not possessing an acid amide bond, for example. If the number-average molecular weight of the polyamine resin and/or polyimine resin is less than 600, the water- and corrosion-resistance of the film lowers, or if exceeding 100,000, the dissolution into a solvent lowers, and a uniform composition is hardly obtained.

It is desired to blend the hydrophilic resin (B) by 10 to 150 parts by weight (hereinafter, simply referred to as parts) to 100 parts of the binder resin (A).

The amine compound used in forming the hydrophilic resin (B) is a primary, secondary, tertiary amine or a quaternary ammonium compound in the groups of aliphatic, aromatic or heterocyclic compounds. These amine compounds themselves form the principal chain of the resin (B), or are used as a pendant (a side chain) bonded to the principal chain.

Among material monomers for synthesizing the forementioned hydrophilic resin (B), the amine compound is desired to be 25 or more mol%. The remaining 0 up to 75 mol% should be, for example, an $\alpha,\beta$-ethylene unsaturated monomer, epoxy compound, or isocyanate compound.

By using such a hydrophilic resin (B), the electrodeposition paint solution promptly penetrates into the coating film at the time of electrodeposition painting, and the electric resistance of the coat film lowers to realize favorable electrodeposition, so that uniformity of the electrodeposition coating film is notably improved.

Furthermore, among the hydrophilic resins (B), by using a resin in which an amino group is comprised as a pendant, a graft resin of a polyamine and/or polyimine resin with a binder resin (A), or a graft resin of a polyamine and/or polyimine resin with a resin having compatibility with a binder resin (A), it is possible to use an organic solvent of general use for painting, and furthermore, even if fine granular silica particles are contained at a high content, it is possible to provide a low cost composition of low viscosity excellent in coating job efficiency, so that it is preferred for achieving the object of the invention.

The forementioned electrodeposition-improving effect may not be obtained if the amine compound in the resin-constituting monomer is less than 25 mol%, or if the blending ratio of the hydrophilic resin is less than 10 parts against 100 parts of the binder resin (A), and if exceeding 150 parts, the adhesion with the electrodeposition coating film tends to lower.

The resins (B11), (B12), (B13), (B21), (B22) and (B23) are described below.

(B11) Acrylic resin copolymer composed of 25 or more mol% of a monomer containing an amino group.

Examples of the monomer containing a amino group include, among others, dimethylamino acrylate, diethylaminomethyl acrylate, dibutylaminomethyl acrylate, dimethylaminoethyl acrylate, diethylaminoethyl acrylate, di(t-butyl)aminoethyl acrylate, diisohexylaminoethyl acrylate, dihexylaminopropyl acrylate, di(t-butyl) aminohexyl acrylate, other acrylates, and their corresponding methacrylates; 4-vinylpyridine, 2-vinylpyridine, 2-methyl-5-vinylpyridine, and other vinylpyridines; and aminopropylacrylamide, of which one compound may be used by alone or two or more compounds may be used in combination.

Monomers to be used, as required, other than the above-mentioned monomers containing an amino group may be any monomer capable of copolymerizing with the monomer containing an amino group, and for example, one compound or two or more compounds may be used out of acrylic monomers not possessing an amino group, such as esters of acrylic acid and methacrylic acid etc. acid amides, acid nitriles, fatty acid vinyl esters, and aromatic monoolefins, etc.

The acrylic resin copolymer (B11) is produced very conveniently by a method of polymerizing the monomer containing an amino group, together with another monomer as desired, in an organic solvent, in the presence of an initiator and catalyst, for as tertiary amine. However, the monomer containing an amino group is desired to be 25 or more mol% of the entire constituent monomers. The organic solvent used in this process is, for example, butyl acetate, and the reaction initiator is, for example, an azo compound such as 4,4'-azobis-4-cyanovaleric acid, and the catalyst is, for example, a tertiary amine compound such as triethylamine.

(B12) Resin obtained by reaction of a multifunctional epoxy compound (i) with a primary or secondary amine compound (ii).

Such a multifunctional epoxy compound (i) is, for example, (1) a polymer obtained from a polyhydric glycidyl ether, or (2) a polymer obtained by polymerization of an $\alpha,\beta$-ethylene unsaturated glycidyl monomer, which may be produced by the following procedure and presented for use.

(1) The polymer obtained from the polyhydric glycidyl ether is synthesized as a polymer possessing a desired number of epoxy groups, by combination of the polyhydric glycidyl ether and polyhydric isocyanate. The polyhydric glycidyl ether to be used here may include, among others, glycerol polyglycidyl ether, diglycerol polyglycidyl ether, and sorbitol polyglycidyl ether. Examples of polyhydric isocyanates are trimers by biuret bonds of isophorone diisocyanate, hexamethylene diisocyanate, and hexamethylene diisocyanate, and commercial products include Sumijoule N-25 (trade name) made by

Sumitomo Bayer Urethane Co.

(2) The polymer obtained from polymerization of an α,β-ethylene unsaturated glycidyl monomer is synthesized as a polymer possessing a desired number of epoxy groups, according to a conventional technique of solution polymerization, from each of monomers, for example, aryl glycidyl ether and glycidyl methacrylate.

The above amine compound (ii) is an amine compound expressed by the formula

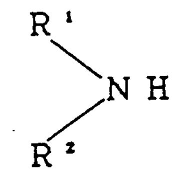

where $R^1$ and $R^2$ may have any one of a hydrogen atom, an alkyl group, aryl group, and a monovalent heterocyclic group (these groups may be with or without a substituted group), except that both $R^1$ and $R^2$ should not be a hydrogen atom at the same time. Besides, $R^1$ and $R^2$ may constitute a heterocyclic ring with the nitrogen atom in the formula (this ring may be either with or without a substitutional group). The amine compound (ii) may be, for example, ethylamine, propylamine, butylamine, isobutylamine, hexylamine, diethylamine, dipropylamine, dibutylamine, dimethylaminoethylamine, diethylaminoethylamine, dimethylaminopropylamine, diethylaminopropylamine, 3-methoxydipropylamine, diethylenetriamine, tetraethylenepentamine and other alkylamines; N-aminopiperidine, 1-amino-4-methylpiperazine, 2-amino-3-nitropyridine, 2-pycolylamine, 2-aminopyridine, 3-aminopyridine, 4-aminopyridine, 2-aminopyrazine, and other aminonitrogen-containing heterocyclic and heteroaromatic compounds; triazole, imidazole, morpholine, piperidine, pyrrolidine, 2-pipecoline, 3-pipecoline, 4-pipecoline and other nitrogen-containing heterocyclic and heteroaromatic amines, and one of these compounds may be used, or two or more compounds may be used in combination.

The resin (B12) is obtained by reaction at a temperature range of 60 to 150°C by mixing the epoxy compound (i) and amine compound (ii) at a ratio of the amine compound (ii) of 25 or more mol%, and adding, as required, a solvent not reacting with a glycidyl group and an amine. The solvent used in this process is xylene or cellosolve acetate, etc.

(B13) Polyethylene imine.

The polyethylene imine (B13) is a polymer made from ethylene imine, and its commercial products include Epomin SP-006, Epomin SP-103, Epomin SP-110, and Epomin SP-3000 made by Nippon Shokubai Kagaku Kogyo Co.

(B21) Polyamine graft resin.

In the producing process of the acrylic resin copolymer (B11), when an azo initiator possessing a carboxylic group (e.g. 4,4'-azobis-4-cyanovaleric acid) is used in the presence of a tertiary amine, a polyamine possessing a terminal carboxylic group is obtained and with this, when a reaction of a compound possessing an oxirane ring and a polymerizable unsaturated group such as glycidyl(meth) acrylate is carried out, a reactive polyamine resin is obtained, and when this obtained resin is copolymerized with α,β-ethylene unsaturated monomer, a grafted polyamine resin (B21) is obtained.

The α,β-ethylene unsaturated monomer used in this process may be an arbitrary α,β-ethylene unsaturated monomer used in production of an ordinary acrylic polymer. Examples may include acrylic acid, methacrylic acid, maleic anhydride, fumaric acid, itaconic acid, crotonic acid, and their ester compounds, but these are not limitative, and any other arbitrary compound may be used as far as possessing the polymerizable unsaturated bond.

The resins (B22) and (B23) are polyamine graft resins (B2). The polyamine graft resin (B2) is manufactured by graftng the binder resin (A), which is soluble in the organic solvent, or a resin having compatibility with the binder resin (A) onto the polyamine resin and/or polyimine resin. It is, however, recommended to blend the polyamine and/or polyimine resin so that the weight percentage of polyamine and/or polyimine resin in the polyamine graft resin (B2) may be 10 to 150 parts against 100 parts of the binder resin (A). The resin having compatibility with the binder resin (A) is such as having ±2 or less in a solubility parameter of the binder resin (A).

(B22) Polyamine graft resin.

By reaction between the polyamine resin possessing a terminal carboxylic group and a multifunctional epoxy compound (i), an epoxy compound grafted with the polyamine resin is obtained by reaction of a terminal carboxyl group of the polyamine resin and an oxirane ring in the epoxy compound (i). In this case, since a basic group exists in the graft chain, it is self-catalyst, and an addition reaction proceeds easily without adding an external catalyst. When the obtained epoxy compound grafted with a basic acryl group reacts with a resin prepolymer possessing a carboxyl group, the polyamine graft resin (B22) is obtained. As the resin prepolymer possessing a carboxyl group, for example, a polyester resin possessing a carboxyl group, an acrylic resin, and other prepolymers (number-average molecular weight, about 300 to 20,000) or denatured binder resin (A) may be properly selected and used. Here, the denatured binder resin (A) is a resin introduced a carboxyl group by reaction of the OH group in the resin (A) with dibasic acid or the like.

(B23) Polyamine graft resin.

As the third ingredient when producing the resin (B12), a resin (iii) possessing a carboxyl group at the terminal end or at other positions than the end is used, such as a polyester resin, an acrylic resin or a denatured binder resin (A), to perform reaction of three ingredients. The resin containing a carboxyl group (iii) is a prepolymer having a number-average molecular weight of approximately 300 - 20,000. In this case, the multifunctional epoxy compound (i), amine compound (ii) and resin containing a carboxyl group (iii) may be subjected to reaction simultaneously or in any arbitrary sequence. For example, a reaction product from the multifunctional epoxy compound (i) and resin containing a carboxyl group (iii) may be subjected to reaction with the amine compound (ii) or the multifunctional epoxy compound (i) and amine compound (ii) may be subjected to reaction to obtain the polyamine graft resin (B23).

The reaction between the multifunctional epoxy compound (i) and the resin containing a carboxyl group (iii) is performed by mixing the epoxy compound (i) and the resin containing a carboxyl group (iii), and adding, as required, a solvent not reacting with a glycidyl group or carboxyl group, at a reaction temperature of 60 to 180 °C, or preferably 80 to 150 °C, continuously until the reacting proportion as measured by the acid value of the unreacted carboxyl group of the resin containing a carboxyl group (iii) becomes more than 90%. In this reaction, as required, a basic catalyst may be used as a reaction catalyst. The solvent used in this process is, for example, cyclohexane, butyl acetate, cellosolve acetate, and xylene.

The forementioned basic catalyst may be pyridine, isoquinoline, quinoline, N-dimethylcyclohexylamine, α-picoline tri-n-butylamine, triethylamine, N-ethylmorpholine, N,N-dimethylaniline, N-(β-hydroxyethyl)amine, N-ethyl-3,5-dimethylmorpholine, dimethyl coconut amine derived from coconut oil, and other organic amines, caustic soda, caustic potash, and other inorganic alkali, which may be used either alone or in a combination of two or more compounds.

The reaction of the multifunctional epoxy compound (i) with the amine comound (ii) is conducted by mixing the multifunctional epoxy compound (i) and amine compound (ii), and adding, as required, a solvent not reacting with a glycidyl group, carboxyl group or amine, and at a reaction temperature of 60 to 150 °C. The solvent to be used is, for example, cyclohexane, butyl acetate, cellosolve acetate, or xylene.

In the invention, fine granular silica (C) is used in order to improve the corrosion-resistance. The fine granular silica (C) has a mean particle diameter of, for example, 1 to 100 nm. If the primary particle diameter of silica particles is less than 1 nm, the alkali resistance unfavorably lowers, or if exceeding 100 nm, there is no improvement effect on the corrosion resistance, and the smoothness of the electrodeposition film may lower. Therefore, the mean particle diameter of silica particles prefers to be in a range of 1 to 100 nm, and more prefers to be in a range of 5 to 50 nm. Such silica particles may include fumed silica and colloidal silica, and particularly the use of fumed silica is preferable. The colloidal silica contains ammonium ions and alkaline metal ions in order to stabilize the colloid, and such ions tend to lower the corrosion-resistance of the film. The content of silica particles is preferably 5 to 150 parts against 100 parts of the binder resin (A), or more preferably 20 to 100 parts. If it is less than 5 parts, the corrosion-resistance improving effect is none, or if exceeding 150 parts, processing ability lowers, which is disadvantageous for achieving the effects of the invention.

The coating composition for precoated metal material in the present invention may contain a lubricant (D) for further improving the processing ability. Examples of the lubricant (D) may include a polyolefin, carboxylic ester, carboxylic metal salt, polyalkylene glycol, and other organic lubricants, and molybdenum disulfide, silicone compound, fluorine compound, and other inorganic lubricants, and it is desired to further improve the processing ability by adding 20 parts or less against 100 parts of the binder resin (A). The particularly preferred lubricant (D) is a polyethylene wax having the density of 0.94 or more, molecular

weight of 1,000 up to 10,000, and acid value of 15 KOH mg/g or less. However, when adding the lubricant (D), the maximum content should be up to 20 parts, and if exceeding the parts, the adhesion of the electrodeposition coating film lowers, which is not desired.

The composition of the present invention may also contain a curing agent (E) used in general pains such as a melamine resin, a resorsinol type of phenol resins, other phenol resins, polyisocyanate compounds, which undergoes reaction at a ratio of 1 up to 100 parts against 100 parts of the binder resin (A) to carry out thermal curing. A particularly preferable hardener (E) is a resorsinol type of phenol resins expressed in the formula

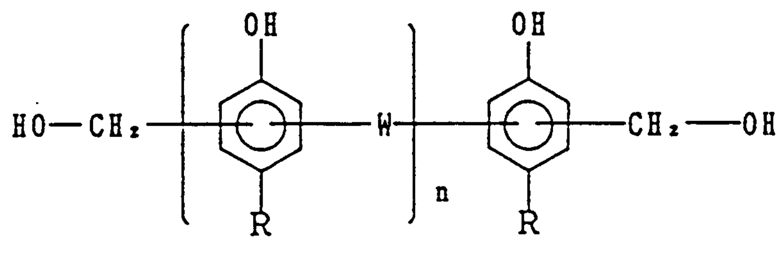

where n is a numeral of 0 to 4; W denotes $-CH_2-$ or $-CH_2-O-Ch_2-$; and R denotes $-CH_2$, H or

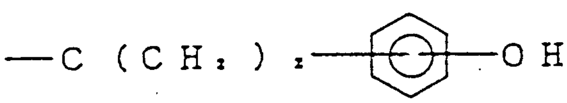

The organic solvent used in the coating composition of the precoated metal material in the present invention may be used by properly selecting from the organic solvents used in ordinary paints, including those capable of dissolving the binder resin (A), hydrophilic resin (B), and curing agent (E) if they are contained. Examples are n-hexane, kerosine, cyclohexane, benzene, toluene, xylene and other hydrocarbon solvent; propanol, butanol, amyl alcohol, cyclohexanol, benzylalcohol and other alcoholic solvents; ethyleneglycol monoethyl ether, ethyleneglycol monoethyl ether acetate, ethyleneglycol monoethyl ether, ethyleneglycol dibutyl ether, diethyleneglycol monoethyl ether, other polyhydric alcohols and their derivative solvents; 1,4-dioxane, furane, diethylacetal, and other ether and acetal types of solvents; methyl ethyl ketone, methyl isobutyl ketone, isophorone, cyclohexanone, and other ketone solvents, and also solvents of ester, fatty acid, phenol, nitrogen compound, sulfur or phosphor compound, and halogenated hydrocarbon types, and one of these compounds may be used by alone, or two or more compounds may be used in combination.

Besides, as required, rust-preventive pigments added to ordinary paints (chromate pigment, especially low-dissolving zinc chromate, lead chromate or barium chromate, phosphate pigments, lead acid salt pigments, etc.), filler extender (carbonate pigment, silicate pigment, etc.), coloring pigment (titanium oxide pigment, iron oxide pigment, carbon, etc.), rust preventives (amine compounds, phenolic carboxylic compounds, etc.), dispersion stabilizer and others may be added, but when adding pigments and other dispersants, the particle diameter must be 10 μm or less in order to sufficiently maintain the spot welding performance and press-processing ability, or it is desired that they are dispersed and adjusted to 10 μm or less at the time when the composition of the present invention is prepared.

The coating composition for precoated metal material in the present invention is particularly useful as a composition for forming an corrosion-resistant coating film of precoated metal material used in automobiles, steel furniture, electric household appliance and others. As the base material for precoated metal materials, for example, aluminum, zinc, copper and steel materials, and other industrial metal materials may be used, but there is no particular limitation to the material quality and shape. Applicable steel plates include, among others, cold rolled steel plate, molten zinc-plated steel plate, molten aluminum-plated steel plate, molten zinc and aluminum alloy-plated steel plates, molten zinc and iron alloy-plated steel plate, electric zinc-plated steel plate, electric zinc- and nickel-plated steel plate, electric zinc and iron alloy-plated steel plate, electric zinc, cobalt and chromium alloy-plated steel plate, and electric zinc and iron alloy two-layer-plated steel plate.

The composition of the present invention is applied, directly after cleaning these base materials by alkali degreasing or other as required, or after ordinary pretreatment. The pretreatment may be chromate

chemical treatment or phosphate chemical treatment, and the former includes the electrolytic chromate treatment, chromate treatment of a coating type, and chromate treatment of a reaction type, and the latter is the zinc phosphate treatment.

The coating composition of the present invention is applied by spraying, roll coating, shower coating, or other proper methods, and a coating film is formed after drying. Preferably, it is baked and dried at 100 to 250 °C.

The coat film formed by the coating composition of the invention is in a dried thickness of about 0.3 to 3 µm, but this range is not limitative. The metal material covered with the coating film (especially, dried thickness of about 0.3 to 3 µm) of the coating composition of the present invention exhibits an excellent corrosion-resistance, and excels also in lubricity, features excellent press-processing ability and is applicable to spot-welding. The particularly superior features of the metal material coated with the coating composition of the present invention are extremely outstanding smoothness, uniformity and adhesion of the electrodeposition coating film formed by electrodeposition coating. Therefore, the coating composition of the present invention is extremely useful as the coating composition for precoated metal material that can satisfy advanced quality-requirements in the fields of automobiles, steel furniture, electric household appliances, and others.

Meanwhile, the coating composition for precoated metal material of the present invention may be directly applied to painting, or may be diluted in a proper solvent before presentation for painting.

The coating composition for precoated metal material of the present invention is capable of applying electrodeposition painting uniform on a formed film, by using the specific polyamine resin and/or polyimine resin as hydrophilic resin. This is estimated because the hydrophilic property of the film is enhanced, penetration of the electrodeposition paint solution into the film is improved, and the current distribution in electrodeposition becomes uniform.

Incidentally, the hydrophilic resin tends to lower the water-resistance of the film, but in this invention a film of high durability may be obtained by using the specific binder resin as defined hereabove.

Corrosion-resistance of the film is achieved by the binder resin of high durability and silica particles.

Generally the range of selection of solvent having compatibility for hydrophilic resin and binder resin is very narrow, and expensive solvents are required. It is also known generally that the viscosity is increased by blending fine particles of silica, but these problems have been solved in the present invention by using the specific hydrophilic resin.

The coating composition for precoated metal material of the present invention has, as mentioned above, the specific binder resin, which is a resin having a number-average molecular weight of 600 to 100,000 with containing 25 or more mol% of an aromatic hydroxy compound in its constituent monomer, and also comprises the hydrophilic resin, which is a polyamine resin and/or polyimine resin having a number-average molecular weight of 600 to 100,000 and containing 25 or more mol% of an amine compound in its constituent monomer, and further contains fine granular silica which is another essential ingredient aside from the binder resin and hydrophilic resin. Accordingly, by using this composition, a uniform thin film is obtained easily, and a coat film excellent in electrodeposition coating (smoothness and adhesion of electrodeposition coating film), high in corrosion-resistance, high in press-processing ability, and applicable to spot-welding may be obtained at low cost.

In the present invention, as the binder resin, by using at least one of the specific resins (A1) to (A6), the resistance to water, resistance to corrosion, and resistance to chemicals are superior even in the presence of a hydrophilic resin, and a further effect of forming a film excellent in adhesion to the electrodeposition coating film is obtained.

In the present invention, moreover, by using at least one of the specific resins (B11) to (B23) as the hydrophilic resin, the electric resistance of the film in the electrodeposition paint bath is lowered without lowering durability of the film, so that a uniform electrodeposition coating film is formed.

In the present invention, by using a fine granular silica having a primary mean particle diameter of 1 to 100 nm, the corrosion-resistance-improving effect is further enhanced.

When the lubricant is further used in the present invention, the processing ability of the coating film is further enhanced.

By using also the curing agent in the present invention, it is hardened at the time of baking, so that the coating film becomes stronger.

## DESCRIPTION OF THE PREFERRED EMBODIMENTS

Practical embodiments of the present invention and reference examples are shown herein, but it must be noted that the invention is not limited to these embodiments alone.

- Producing example 1 (preparation of the binder resin A1) -

Into a solution of 475 parts of an epoxy resin of the epichlorohydrine-bisphenol A type (number-average molecular weight 1,400, epoxy equivalent 950, bisphenol A 45 mol%) in 95 parts of xylol and 119 parts of cellosolve acetate was added 53.5 parts (0.5 mol) of diethanolamine and the mixture was allowed to react for 6 hours at 145 °C until the epoxy group was no longer detected by an infrared spectral analysis, then 209 parts of xylol and 130 parts of methyl ethyl ketone were added, and the mixture was cooled to obtain a varnish (solid content 49% by weight) of the binder resin (A1).

- Producing example 2 (preparation of the binder resin A2) -

Into a solution of 475 parts of an epoxy resin of the epichlorohydrin-bisphenol A type (number-average molecular weight 1,400, epoxy equivalent 950, bisphenol A 45 mol%) in 95 parts of xylol and 119 parts of cellosolve acetate were added 39.2 parts (0.21 mol) of azelaic acid and 8.3 parts (0.08 mol) of diethanolamine and the mixture was allowed to react for 6 hours at 145 °C until the epoxy group was no longer detected by an infrared spectral analysis and the acid value of the resin solid content became 1.1 KOH mg/g, then 209 parts of xylol and 130 parts of methyl ethyl ketone were added, and the mixture was cooled to obtain a varnish (solid content 49% by weight) of the binder resin (A2).

- Producing example 3 (preparation of the binder resin A3) -

A solution of 222 parts (1 mol) of isophorone diisocyanate in 222 parts of cellosolve acetate was warmed to 80 °C, and to this were added dropwise 113 parts (1 mol) of ε-caprolactam and 113 parts of cellosolve acetate during 1 hour and the mixture was allowed to react. After the addition, the reaction was completed while keeping at 80 °C during 3 hours, and a partially blocked polyisocyanate compound (d) in which the isocyanate equivalent was 670 gram-equivalent was obtained.

Next, to 1075.5 parts of the resin (A2) obtained in Producing Example 2, 55.9 parts (0.08 mol) of the partially blocked polyisocyanate compound (b) and 118 parts of cellosolve acetate were added and allowed to react for 3 hours at 100 °C, and then 102 parts of isopropyl alcohol was added, and the mixture was cooled to obtain a varnish (solid content 41% by weight) of the urethane resin (A3).

- Producing example 4-1 (preparation of a binder resin not containing an aromatic hydroxy compound) -

The procedure of Producing Example 1 was repeated except that an epoxy resin of the epichlorohydrine-hydrogenated bisphenol A type (number-average molecular weight 1,400, epoxy equivalent 950, not containing an aromatic hydroxy compound) was used instead of the epoxy resin of epichlorohydrine-bisphenol A type, whereby a varnish (solid content 49% by weight) of the binder resin not containing an aromatic hydroxy compound was obtained.

- Producing example 5 (preparation of a binder resin having a number-average molecular weight of 600 or less) -

The procedure of Manufacturing Example 1 was repeated except that an epoxy resin of the epichlorohydrine-bisphenol A type (epoxy equivalent 250) having a number-average molecular weight of 470 was used by 125 parts instead of an epoxy resin of the epichlorohydrine-bisphenol A type having number-average molecular weight of 1,400, and that 22.5 parts of dimethyl amine was used instead of diethanolamine, a varnish (solid content 21% by weight) of the binder resin was obtained.

Concerning the binder resins obtained in the foregoing producing example and the commercial binder resins, the kind, the mol% of an aromatic hydroxy compound in the monomer constituting the binder resin, and the number-average molecular weight are shown in Table 1.

- Producing example 4-2 (preparation of a binder resin containing 20 mol% of an aromatic hydroxy compound) -

The same procedure of Producing Example 2 was repeated except that 475 parts of an epoxy resin of the epichlorohydrin-bisphenol A type (number-average molecular weight 1,400, epoxy equivalent 950, bisphenol A 45 mol%) was replaced by 232 parts of the epoxy resin and 243 parts of an epoxy resin of the epichlorohydrin-hydrogenated bisphenol A type (number-average molecular weight 1,400, epoxy equivalent

950, aromatic hydroxy compound not contained), a varnish (solid content 49% by weight) of the binder resin containing 20 mol% of an aromatic hydroxy compound was obtained.

Table 1

| Binder resins used in examples and reference examples | | | |
|---|---|---|---|
| | Kind | Content of aromatic hydroxy compound in monomers composing the resin [mol%] | Number-average molecular weight |
| Producing example 1 | A1 | 39 | 1,600 |
| Producing example 2 | A2 | 42 | 12,000 |
| Producing example 3 | A3 | 37 | 13,000 |
| Producing example 4-1 | — | None | 1,600 |
| Producing example 5 | — | 26 | 560 |
| YP-50J | A4 | 50 | 40,000 |
| CKM-5254 | A5 | 30 | 1,500 |
| Resin-M | A6 | 100 | 3,700 |
| YD-128 | — | 33 | 355 |
| Producing example 4-2 | — | 20 | 12,000 |

(Notes)

- YP-50J : Polyphenoxy resin made by Toto Kasei Co.,
- CKM-5254 : Phenol resin of Novolak type made by Showa Kobunshi Co.
- Resin-M : Paravinylphenol resin manufactured by Maruzen Oil Co.
- YD-128 : Epoxy resin of bisphenol A type made by Toto Kasei Co.

- Producing example 6 (preparation of polyamine resin B11) -

In a reaction vessel furnished with two dropping funnels A and B, a cooling pipe, nitrogen-introducing pipe, thermometer, and agitating blades, 800 parts of butyl acetate was placed, and the temperature was raised to 120 °C. On the other hand, 800 parts of dimethylamino ethyl methacrylate was placed in the dropping funnel A, and a mixed solution of 80 parts of 4,4'-azobis-4-cyanovaleric acid, 320 parts of butanol, and 58 parts of triethylamine was charged in the dropping funnel B. Under nitrogen atmosphere, the contents in the dropping funnels A and B were completely added dropwise during 3 hours at 120 °C. After adding, while maintaining at 120 °C for 30 minutes, a mixed solution of 8 parts of 4,4'-azobis-4-cyanovaleric acid, 32 parts of butanol, and 5.8 parts of triethylamine was charged in the dropping funnel B, and the whole solution was added dropwise during 30 minutes. After dropping, and aging for 1 hour at 120 °C, the solvent was removed under a reduced pressure at 100 °C, and 945 parts of xylene was added, whereby a xylene solution (solid content 50% by weight) of the polyamine resin (B11) was obtained.

Producing example 7 (preparation of polyamine B12) -

In a reaction vessel furnished with a dropping funnel, cooling pipe, nitrogen-introducing pipe, thermometer, and agitating blades, 351 parts of cellosolve acetate was placed, and the temperature was raised to 120 °C, and 585 parts of glycidyl methacrylate and 13 parts of t-butylperoxy-2-ethylhexanoate were charged into the dropping funnel, and the contents in the dropping funnel were added dropwise at a constant speed during 3 hours at 120 °C under nitrogen atmosphere. The temperature was helt at 120 °C for 30 minutes after adding. Then, 49 parts of cellosolve acetate and 2 parts of t-butylperoxy-2-ethylhexanoate were charged in the dropping funnel, and the contents were added dropwise at a constant speed during 1 hour at 120 °C under nitrogen atmosphere. After adding, while maintaining at 120 °C for 1 hour, polymerization was completed. As a result, the multifunctional epoxy compound (i) having 59.8% of solid content and 9,800 of a number-average molecular weight was obtained.

In a reaction vessel furnished with a cooling pipe, nitrogen-introducing pipe, thermometer, and agitating blades, 602.1 parts of the multifunctional epoxy compound (i) and 185 parts of diethylamine were placed, and reaction was performed for 5 hours with stirring at 90 °C. Then, 80 parts of xylene was placed, and the mixture was stirred for 30 minutes, and further xylene was added until the solid content became to 50 wt.%, and a varnish of the polyamine resin (B12) was obtained.

- Producing example 8 (preparation of polyamine resin B21) -

In a reaction vessel furnished with two dropping funnels A and B, a cooling pipe, nitrogen-introducing pipe, thermometer and agitating blades, 590 parts of butyl acetate was placed, and the temperature was raised to 120 °C. On the other hand, 200 parts of dimethylaminoethylmethacrylate was charged in the dropping funnel A, and a mixed solution of 40 parts of 4,4'-azobis(4-cyano)valeric acid, 200 parts of butanol and 24 parts of triethylamine was charged in the dropping funnel B. Under nitrogen atmosphere at 120 °C,

all the contents in the dropping funnels A and B were added dropwise during 3 hours. After adding and maintaining at 120°C for 30 minutes, the mixture was added with 37 parts of glycidyl methacrylate and 2.6 parts of hydroquinone and allowed to react for 60 minutes at 120°C. After cooling, the content was taken out to obtain the product C.

In a reaction vessel furnished with an agitating rod, cooling pipe, thermometer, nitrogen-introducing pipe and dropping funnel, 35 parts of toluene and 10 parts of n-butanol were placed, and the temperature was raised to 105°C. In the dropping funnel, 50 parts of methyl methacrylate, 30 parts of n-butyl acrylate, 4.6 parts of n-butylmethacrylate, 14 parts of 2-hydroxyethyl methacrylate, 1.4 parts of acrylic acid, 23.6 parts of the product C, and 2 parts of azobisisobutylonitrile were charged and added dropwise at a constant speed during 3 hours at 105°C. At 30 minutes after adding, 0.2 part of t-butylperoxy-2-ethylhexanoate and 5 parts of toluene were added, and following 2-hour aging, 40 parts of toluene was added to the reaction vessel, and after cooling, the content was taken out of the reaction vessel, and a varnish (nonvolatile content 50%) of the polyamine graft resin (B21) having number-average molecular weight of 7,800 was obtained.

This polyamide graft resin (B21) had the viscosity of Y-Z (measured by Toshiba bubble viscometer at a temperature of 25°C) and acid value of 11.0 (KOH mg/g solid content), and contained 5.5 wt.% of a polyamine resin composed of 76 mol% of amine compound.

- Producing example 9 (preparation of polyamine resin B22) -

In a reaction vessel furnished with a cooling pipe, nitrogen-introducing pipe, thermometer and agitating blades, 700 parts of xylol solution of polyamine resin (B11) obtained in Producing Example 6 was placed, and the temperature was raised to 100°C, and 36 parts of ERL-4206 (bifunctional epoxy compound made by Union Carbide) was added, and after keeping at the temperature for 2 hours, a varnish (solid content 48% by weight) of an epoxy-denatured polyamine containing 83 mol% of an amine compound was obtained.

In a reaction vessel furnished with a cooling pipe, nitrogen-introducing pipe, thermometer and agitating blades, 1,000 parts of a varnish (solid content 60% by weight) of a polyester resin prepolymer (resin acid value 15, OH value 100, number-average molecular weight 4,000) possessing a carboxyl group and 200 parts of the epoxy-denatured polyamine resin varnish were placed and the mixture was maintained at 140°C for 3 hours to obtain a polyamine graft resin (B22) (solid content 58% by weight). The content of a polyamine resin in this polyamine graft resin (B22) was 16 wt.%, and the number-average molecular weight was 6,000.

- Producing example 10 (preparation of polyamine graft resin B23) -

In a reaction vessel furnished with a dropping funnel, cooling pipe, nitrogen-introducing pipe, thermometer, and agitating blades, 400 parts of xylene was placed, and the temperature was raised and kept at 130°C, while in the dropping funnel 127 parts of styrene, 336 parts of methyl methacrylate, 45 parts of 2-hydroxyethyl methacrylate, 60 parts of n-butyl methacrylate, 26 parts of thioglycollic acid, and 6 parts of t-butylperoxy-2-ethylhexanoate were charged, and the whole contents in the dropping funnel was added dropwise at a constant speed during 3 hours at 130°C under nitrogen atmosphere. After adding, polymerization was completed by maintaining the mixture at 130°C for 1 hour. As a result, an acrylic resin prepolymer (iii) containing a carboxylic group, which had a solid content of 60.3%, number-average molecular weight of 2,700, acid value of solid content of 20.3, OH value of 58, and Tg of 68.4, was obtained.

In a reaction vessel furnished with a cooling pipe, nitrogen-introducing pipe, thermometer and agitating blades, 602.1 parts of the multifunctional epoxy compound (i) obtained in the producing example 7 and 166 parts of diethylamine which is the amine compound (ii) were placed, and an addition reaction was performed for 5 hours at 90°C. In succession, 966 parts of acrylic resin prepolymer (iii) was placed and the mixture was allowed to react for 3 hours at 90°C to obtain a polyamine graft resin (B23). This polyamine graft resin (B23) had a solid content of 64% by weight, and number-average molecular weight of 30,000, and contained 46 wt.% of a polyamine resin containing 47 mol% of an amine compound.

- Producing example 11-1 (preparation of polyamine resin containing 9 mol% of amine compound) -

In the dropping funnel A of Producing Example 6, 100 parts of dimethylaminoethyl acrylate, 200 parts of styrene, 300 parts of methyl methacrylate, and 200 parts of 2-ethylhexyl acrylate were blended, and thereafter the procedure of Producing Example 6 was repeated to obtain a polyamine resin (amine compound 9 mol%, number-average molecular weight 2,000, solid content 50% by weight).

- Producing example 11-2 (preparation of polyamine resin containing 20 mol% of amine compound) -

In the dropping funnel A of Producing Example 6, 221 parts of dimethylaminoethyl acrylate, 175 parts of styrene, 262 parts of methyl methacrylate, and 175 parts of 2-ethylhexyl acylate were blended, and thereafter the procedure of Producing Example 6 was repeated to obtain a polyamine resin (amine compound 20 mol%, number-average molecular weight 2,000, solid content 51% by weight).

- Producing example 12 (preparation of polypropylene glycol denatured nylon 6) -

In a reaction vessel furnished with agitating blades and a nitrogen-introducing pipe, 1 mol of pyridine-2,6-dicarboxylic dichloride, 6 mols of ε-caprolactam, and pyridine as a hydrogen chloride scavenger were placed, and the mixture was allowed to react for 1 hour at 120 °C under nitrogen atmosphere. The reaction mixture was poured into a large volume of chilled water to precipitate a reaction product as sediment, and after this sediment was taken by filteration, washed by purified water and methanol in succession, and dried under vacuum to obtain grayish white powder of pyridinedicarbonyl biscaprolactam.

A mixture of 70 wt.% of substantially anhydrous ε-caprolactam and 30 wt.% of polypropylene glycol having a molecular weight of 4,000 was melted and held at 80 °C, and to this mixture sodium caprolactamate was added in a proportion of 1 mol% against the ε-caprolactam, and the above-obtained pyridine dicarbonyl biscaprolactam in a proportion of 2 mol% against the ε-caprolactam, and the mixture were uniformly mixed, immediately put into the mold maintained at a temperature of 140 °C, and subjected to polymerization at this temperature. The polymerization was completed with about 6 minutes, whereby a polypropylene glycol-denatured nylon 6 was obtained.

Of the hydrophilic resins obtained in the above-described producing examples and commercial hydrophilic resins, the kind, mol% of amine compounds in the nomomers composing the hydrophilic resins, and number-average molecular weight are shown in Table 2.

Table 2

| Hydrophilic resin used in examples and reference examples | | | |
|---|---|---|---|
| | Kind | Content of amine compound in monomer composing resin [mol%] | Number-average molecular weight |
| Producing example 6 | B11 | 94 | 2,000 |
| Producing example 7 | B12 | 50 | 15,000 |
| Producing example 8 | B21 | Contained 5.5 wt.% of resin con-containing 76 mol% amine compound | 7,800 |
| Producing example 9 | B22 | Contained 16 wt.% of resin con-containing 83 mol% amine compound | 6,000 |
| Producing example 10 | B23 | Contained 46 wt.% of resin con-containing 47 mol% amine compound | 30,000 |
| Producing example 11-1 | — | 9 | 2,000 |
| Producing example 12 | | Denatured polyamide resin | |
| SP-300 | B13 | 100 | 30,000 |
| SP-003 | — | 100 | 300 |
| Producing example 11-2 | — | 20 | 2,000 |

(Note)

- SP-300 : Polyethylene imine resin "Epomin SP-300" made by Nippon Shokubai Kagaku Kogyo Co.
- SP-003 : Polyethylene imine resin "Epomin SP-003" made by Nippon Shokubai Kagaku Kogyo Co.

Using the compounds obtained in Producing Examples 1 to 12 and commercial products, coating compositions for precoated metal material were produced as follows.

- Example 1 -

The binder resin (A1) obtained in Producing Example 1 by 100 parts as nonvolatile contents, and 44 parts of A-300 (Aerosil 300 which is fumed silica having mean primary particle diameter of 8 nm made by Nippon Aerosil Ltd.), 6 parts of C-3620 (Ceridust 3620 which is a polyethylene wax made by Hoechst, density 0.95 to 0.97, molecular weight 2,000, acid value 0), and 600 parts of cyclohexane were placed into a stainless steel container, and zircon beads were further added by about 1,000 parts, and the mixture obtained was dispersed by a sand-grinding mill at 3,000 rpm for about 15 minutes and filtered to obtain a silica-dispersion paste.

To the whole quantity of the silica-dispersion paste were added 116 parts of the polyamine graft resin (B23) obtained in Producing Example 10 as nonvolatile contents, and 25 parts of the hardener BSK-316 (phenol resin of a resorsinol type made by Showa Kobunshi Co.) as nonvolatile contents, and the mixture were dissolved in cyclohexane adjusting the concentration of the mixture nonvolatile contents at 20 wt.%, whereby a coating composition for precoated metal material was obtained.

- Examples 2 - 13 and reference examples 1 - 8 -

Using the raw materials shown in Table 3 by the prescribed contents therein, coating compositions for precoated metal material were prepared according to the method of Example 1.

Of the coating compositions for precoated metal material in the examples and reference examples, the coating performance of coated films and quality of metal material coated with the compositions were studied. The results are shown in Table 3.

Preparation of Metal Materials Coated with Compositions

A steel plate electroplated with zinc/nickel alloy (loading 20 g/$m^2$) was cleaned with an alkali degreasing agent of a general purpose, washed with water, dried, and treated with a chromate treating agent of a commercial coating type (Surfcoat NRC300 made by Nippon Paint Co.) (chromium deposit 60 mg/$m^2$), and dried with a hot air blow of 100 °C. Then, the coating compositions of the examples and reference examples were applied by roll coating, and dried at the maximum plate temperature of 150 °C to prepare test pieces. The roll coating condition was adjusted so that dried film thickness of the coating film would be 1 $\mu$m.

Test, Evaluation Method

The thin film coatability was evaluated by the viscosity and thixotropic index (TI value) at 20% of a solid content concentration of the compositions. That is, when the viscosity is high and the TI value is large, a nonuniform film is formed (a roving phenomenon occurs) in a case where roll coating is applied, and it is therefore preferred when both the viscosity and TI value are small.

The viscosity was measured by a # 4 Ford cup at a temperature of 20 °C.

The TI value was determined by the ratio between the viscosity at 6 rpm and that at 60 rpm, by using rotor No. 3 of a type B viscometer (model BM made by Tokyo Keiki Co.). The criterion was as follows.

o: Excellent (Ford cup viscosity 100 sec or less, TI value 2 or less)

x: Defective (Ford cup viscosity over 100 sec, TI value over 2)

The corrosion-resistance of the composition-coated materials was evaluated by preparing the test pieces in the above-described method, with which a 5% aqueous NaCl solution was sprayed for 4 hours at 35°C, drying for 2 hours at 60°C and holding in the atmosphere of 50°C and relative humidity of 95% or more for 2 hours were performed, and this complex corrosion test was repeated by 100 cycles to observe rusting percentage of the flat surface part visually. The criterion was as follows.

o: No abnormality
o: White rust was formed in 10% or less of area
△: White rust was formed in 10% or wider area
x: Red rust was formed

The press-processing ability of materials coated with the composition was evaluated by processing the test pieces in the process of cylindrical deep drawing under the conditions of a punch diameter of 50 mmØ, drawing ratio of 1.9 and crease-pressing pressure of 0.5 ton and then, by adhering a tacky cellophane tape to a part of the cylinder side wall, peeling off abruptly, and observing the peeled state of the coated film. The criterion was as follows.

o: No peeling-off
o: Slight peeling-off (less than 10% of area)
△: Peeling-off of 10% or more but less than 50% or area
x: Peeling-off of 50% or more of area

The smoothness of electrodeposition coating films was evaluated by applying cationic electrodeposition paint (Power Top U-30 of Nippon Paint Co.) on the test pieces by electrodeposition coating under the conditions of applied voltage of 200 V, electrodeposition time of 3 minutes, and paint-bath temperature of 28 to 30°C, baking for 30 minutes at 175°C to form a coating film having a dry film-thickness of about 20 µm and then, observing the smoothness and uniformity of the coating film visually, according to the following criterion.

◎: Excellent
o: Good
△: Rough skin
x: Exposed surface

The adhesion of electrodeposition coating films was evaluated by immersing the electrodeposition coated plates in 40°C purified water for 240 hours, standing them at room temperature for 24 hours, cutting in by a knife to make 100 hatching squares of 1 mm side, and peeling off the coat film by using an adhesive tape made from a cellophane paper. The criterion was as follows.

◎: No peeling-off
o: 1 peeling-off
△: 2 to 10 peeling-off
x: 11 or more peeling-off

Table 3 (1/2)

| | Blend of coating composition for precoated metal material (the lower figure indicates nonvolatile content: parts by weight) | | | | | | Thin film coat-ability | Corrosion-resistance | Press-processing performance | Electro-deposition coating film smoothness | Electro-deposition coating film adhesion |
|---|---|---|---|---|---|---|---|---|---|---|---|
| | Binder resin | Hydrophilic resin | Curing agent | Silica | Lubricant | Solvent *1 | | | | | |
| Example 1 | Producing example 1 100 | Producing example 10 *2 116 | BKS-316 25 | A-300 44 | C-3620 6 | Cyclohexanone | ○ | ◎ | ○ | ◎ | ◎ |
| Example 2 | Producing example 2 100 | Producing example 10 *2 116 | BKS-316 25 | A-300 44 | C-3620 6 | Cyclohexanone | ○ | ◎ | ○ | ◎ | ◎ |
| Example 3 | Producing example 3 100 | Producing example 10 *2 116 | BKS-316 25 | A-300 44 | C-3620 6 | Cyclohexanone | ○ | ◎ | ◎ | ◎ | ◎ |
| Example 4 | YP-50J 100 | Producing example 10 *2 116 | BKS-316 25 | A-300 44 | C-3620 6 | Cyclohexanone | ○ | ○ | ○ | ◎ | ◎ |
| Example 5 | CKM-5254 100 | Producing example 10 *2 116 | BKS-316 25 | A-300 44 | C-3620 6 | Cyclohexanone | ○ | ○ | ○ | ◎ | ◎ |
| Example 6 | Resin-M 100 | Producing example 10 *2 116 | BKS-316 25 | A-300 44 | C-3620 6 | Cyclohexanone | ○ | ○ | ○ | ◎ | ○ |
| Example 7 | Producing example 3 100 | Producing example 6 53 | BKS-316 25 | A-300 44 | C-3620 6 | Cyclohexanone | ○ | ◎ | ◎ | ◎ | ○ |
| Example 8 | Producing example 3 100 | Producing example 7 53 | BKS-316 25 | A-300 44 | C-3620 6 | Cyclohexanone | ○ | ◎ | ◎ | ◎ | ◎ |
| Example 9 | Producing example 3 100 | SP-300 53 | BKS-316 25 | A-300 44 | C-3620 6 | Cyclohexanone | ○ | ○ | ◎ | ◎ | ○ |
| Example 10 | Producing example 3 100 | Producing example 8 *3 200 | BKS-316 25 | A-300 44 | C-3620 6 | Cyclohexanone | ○ | ◎ | ◎ | ○ | ◎ |
| Example 11 | Producing example 3 100 | Producing example 9 *4 150 | BKS-316 25 | A-300 44 | C-3620 6 | Cyclohexanone | ○ | ◎ | ◎ | ○ | ◎ |

*1: The solvent was added to make concentration in the composition of 20 wt.%.
*2: Equivalent to 53 parts of the polyamine resin content.
*3: Equivalent to 11 parts of the polyamine resin content.
*4: Equivalent to 24 parts of the polyamine resin content.

Table 3 (2/2)

| | Blend of coating composition for precoated metal material (the lower figure indicates nonvolatile content: parts by weight) | | | | | | Thin film coat-ability | Corrosion-resistance | Press-processing performance | Electro-deposition coating film smoothness | Electro-deposition coating film adhesion |
|---|---|---|---|---|---|---|---|---|---|---|---|
| | Binder resin | Hydrophilic resin | Curing agent | Silica | Lubricant | Solvent *1 | | | | | |
| Example 12 | Producing example 3 100 | Producing example 10 *2 116 | BKS-316 25 | A-300 44 | None | Cyclohexanone | ○ | ◎ | ○ | ◎ | ◎ |
| Example 13 | Producing example 3 100 | Producing example 10 *2 116 | None | A-300 44 | C-3620 6 | Cyclohexanone | ○ | ○ | ○ | ◎ | ○ |
| Reference 1 | Producing example 4-1 100 | Producing example 10 *2 116 | BKS-316 25 | A-300 44 | C-3620 6 | Cyclohexanone | ○ | × | ◎ | ◎ | ○ |
| Reference 2 | YD-128 100 | Producing example 10 *2 116 | BKS-316 25 | A-300 44 | C-3620 6 | Cyclohexanone | Gelation | — | — | — | — |
| Reference 3 | Producing example 3 100 | Producing example 11-1 53 | BKS-316 25 | A-300 44 | C-3620 6 | Cyclohexanone | ○ | ◎ | ◎ | × | △ |
| Reference 4 | Producing example 3 100 | SP-003 53 | BKS-316 25 | A-300 44 | C-3620 6 | Cyclohexanone | ○ | △ | ◎ | △ | △ |
| Reference 5 | Producing example 3 100 | Producing example 12 42 | BKS-316 25 | A-300 44 | C-3620 6 | N-methyl-2-pyrrolidone | × | ◎ | ◎ | ◎ | ◎ |
| Reference 6 | Producing example 5 100 | Producing example 10 *2 116 | BKS-316 25 | A-300 44 | C-3620 6 | Cyclohexanone | ○ | × | ○ | ◎ | △ |
| Reference 7 | Producing example 4-2 100 | Producing example 10 *2 116 | BKS-316 25 | A-300 44 | C-3620 6 | Cyclohexanone | ○ | × | ◎ | ◎ | ○ |
| Reference 8 | Producing example 3 100 | Producing example 11-2 53 | BKS-316 25 | A-300 44 | C-3620 6 | Cyclohexanone | ○ | ◎ | ◎ | △ | △ |

*1: The solvent was added to make concentration in the composition of 20 wt.%.
*2: Equivalent to 53 parts of the polyamine resin content.
*3: Equivalent to 11 parts of the polyamine resin content.
*4: Equivalent to 24 parts of the polyamine resin content.

As shown in Table 3, the coating compositions for precoated metal materials in the examples are excellent in the thin film coatability, and the coated materials on which such compositions were applied were excellent in all of corrosion-resistance, press-processing performance, electrodeposition coating film smoothness, electro-deposition coating film adhesion. By contrast, in the composition in Reference example 1, since an aromatic hydroxy compound is not contained in the monomer for composing the binder resin,

the corrosion-resistance is poor. In the composition of Reference 2, since the binder resin reacts with the hydrophilic resin, the coating film was not formed. In the composition of Reference 3, since an amine compound was not contained by more than 25 mol% in the monomer for composing the hydrophilic resin, the electro-deposition coating film smoothness was poor. In the composition of Reference 4, since the number-average molecular weight of the hydrophilic resin was low, the corrosion-resistance and electrodeposition coating film smoothness were inferior. In the composition of Reference 5, since a denatured polyamide resin was used as the hydrophilic resin, N-methyl-2-pyrrolidone was required as a solvent and also the thin film coatability was poor. In the composition of Reference 6, since the number-average molecular weight of the binder resin was less than 600, the corrosion-resistance was poor. In the composition of Reference 7, although an aromatic hydroxy compound was contained in the monomer for composing the binder resin, since the content was less than 25 mol%, the result same to that in Reference 1. In the composition of Reference 8, although the ratio of the amine compound in the monomer for composing the hydrophilic resin was more than that in Reference 3, since it was less than 25 mol%, the electro-deposition coating film smoothness and electrodeposition coating film adhesion were not sufficient.

## Claims

1. A coating composition for precoated metal material comprising, as essential ingredients, a binder resin possessing film-forming capability, a hydrophilic resin for performing electrodeposition coating uniformly, and fine granular silica for enhancing corrosion-resistance, being dissolved or dispersed in an organic solvent, the coating composition being characterized by the binder resin having a number-average molecular weight of 600 to 100,000 and containing 25 or more mol% of an aromatic hydroxy compound in its constituent monomer and by the hydrophilic resin being a polyamine resin and/or polyimine resin having a number-average molecular weight of 600 to 100,000 and containing 25 or more mol% of an amine compound in the constituent monomer, the binder resin being at least one of the following (A1) to (A6):

   (A1) An epoxy-based resin obtained from a reaction of an epoxy resin of a bisphenol type and/or an epoxy resin of a resorcin type with a secondary amine and, substantially, not containing an epoxy group;
   (A2) An epoxy ester resin obtained from a reaction of an epoxy resin of a bisphenol type and/or an epoxy resin of a resorcin type with a dicarboxylic acid and, substantially, not containing an epoxy group;
   (A3) An urethanated resin obtained from a reaction of a resin in a group of said resins (A1) and/or (A2), in which a primary hydroxyl group is introduced by an alkanolamine compound having a primary hydroxyl group, with a partially-blocked polyisocyanate compound;
   (A4) A polyphenoxy resin;
   (A5) A phenol resin of a novolak type;
   (A6) A polyalkenylphenol resin;

   the hydrophilic resin being at least one of the following (B11), (B12), (B13), (B21), (B22), and (B23), selected from :

   (B11) An acryl resin-based copolymer containing 25 or more mole % of an amino group-containing monomer;
   (B12) A resin obtained from a reaction of a polyfunctional epoxy compound with a primary or secondary amine compound;
   (B13) A polyethylene imine;
   (B21) A polyamine graft resin obtained from further graft polymerization of said (B11) with an $\alpha,\beta$-ethylenic unsaturated monomer;
   (B22) A polyamine graft resin obtained by grafting onto said (B11) a resin having compatibility with a binder resin and/or a binder resin;
   (B23) A polyamine graft resin obtained by grafting onto said (B12) a resin having compatibility with a binder resin and/or a binder resin; the blending ratio of the hydrophilic resin in relation to the binder resin being 10-150:100 by weight and the blending ratio of the silica particles in relation to the binder resin being 5-150:100 by weight.

2. A coating composition for precoated metal material as claimed in Claim 1, wherein the primary mean particle diameter of the fine granular silica is 1 to 100 nm.

3. A coating composition for precoated metal material as claimed in Claim 1 or 2, wherein a lubricant is included.

4. A coating composition for precoated metal material as claimed in any one of Claims 1 - 3, wherein a curing agent is included.

**Patentansprüche**

1. Überzugsmasse für vorbeschichtete Metalle enthaltend als wesentliche Bestandteile ein Bindemittelharz mit Filmbildungsvermögen, ein hydrophiles Harz zur Erzeugung eines gleichmäßigen elektro abgeschiedenen Überzuges und ein feinkörniges Siliciumdioxid zur Erhöhung der Korrosionsbeständigkeit, das gelöst oder dispergiert in einem organischen Lösungsmittel ist, die dadurch gekennzeichnet ist, daß das Bindemittelharz ein Zahlendurchschnitts-Molekulargewicht von 600 bis 100.000 aufweist und 25 oder mehr Molprozente einer aromatischen Hydroxyverbindung in ihrem Monomerbestandteil enthält, und das hydrophile Harz ein Polyaminharz und/oder Polyiminharz mit einem Zahlendurchschnitts-Molekulargewicht von 600 bis 100.000 ist und 25 oder mehr Molprozente an Aminverbindung in dem Monomerbestandteil enthält,
wobei das Bindemittelharz mindestens eines der folgenden (A1) bis (A6) ist:
(A1) Ein auf Epoxy basierendes Harz, das man durch Umsetzung eines Epoxyharzes vom Bisphenol-Typ und/oder einem Epoxyharz vom Resorcin-Typ mit einem sekundären Amin erhält und das im wesentlichen keine Epoxygruppe enthält;
(A2) Ein Epoxyesterharz, das man durch Umsetzung eines Epoxyharzes vom Bisphenol-Typ und/oder einem Epoxyharz vom Resorcin-Typ mit einer Dicarbonsäure erhält und das im wesentlichen keine Epoxygruppe enthält;
(A3) Ein urethanisiertes Harz, erhalten durch Umsetzung eines Harzes aus der Gruppe der Harze (A1) und/oder (A2), in welchem eine primäre Hydroxylgruppe eingeführt ist durch eine Alkanolaminverbindung, die eine primäre Hydroxylgruppe aufweist, mit einer teilweise blockierten Polyisocyanat-Verbindung;
(A4) ein Polyphenoxyharz;
(A5) ein Phenolharz vom Novolack-Typ;
(A6) ein Polyalkenylphenolharz;
und wobei das hydrophile Harz mindestens ein Harz ist, das aus den folgenden Harzen (B11), (B12), (B13), (B21), (B22) und (B23) ausgewählt ist:
(B11) Ein auf Acryl basierendes Copolymeres enthaltend 25 oder mehr Molprozente eines Aminogruppen enthaltenden Monomeren;
(B12) Ein Harz erhalten durch Umsetzung einer polyfunktionellen Epoxyverbindung mit einer primären oder sekundären Aminverbindung;
(B13) Ein Polyethylenimin;
(B21) Ein Polyaminpfropfharz, erhalten durch weitere Pfropfpolymerisation von (B11) mit einem $\alpha,\beta$-ethylenisch ungesättigten Monomeren;
(B22) Ein Polyaminpfropfharz, erhalten durch Aufpropfen auf (B11) eines Harzes, das verträglich ist mit einem Bindemittelharz, und/oder eines Bindemittelharzes;
(B23) Ein Polyaminpfropfharz, erhalten durch Aufpfropfen auf (B12) eines Harzes, das verträglich ist mit einem Bindemittelharz, und/oder eines Bindemittelharzes;
das Mischungsverhältnis des hydrophilen Harzes zu dem Bindemittelharz beträgt 10-150:100 bezogen auf das Gewicht und das Mischungsverhältnis von Siliciumdioxidteilchen zu dem Bindemittelharz beträgt 5-150:100 bezogen auf das Gewicht.

2. Überzugsmasse für vorbeschichtete Metalle gemäß Anspruch 1, dadurch gekennzeichnet, daß der hauptsächliche mittlere Teilchendurchmesser des feinkörnigen Siliciumdioxids 1 bis 100 nm beträgt.

3. Überzugsmasse für vorbeschichtete Metalle gemäß Anspruch 1 oder 2, dadurch gekennzeichnet, daß es ein Schmiermittel enthält.

4. Überzugsmasse für vorbeschichtete Metalle gemäß Anspruch 1 bis 3, dadurch gekennzeichnet, daß es einen Härter enthält.

## Revendications

1. Composition de revêtement pour matériau métallique prérevêtu comprenant, en tant qu'ingrédients essentiels, une résine liante possédant une capacité filmogène, une résine hydrophile pour effectuer un revêtement par électrodéposition uniformément, et de la silice granulaire fine pour augmenter la résistance à la corrosion, dissous ou dispersés dans un solvant organique, la composition de revêtement étant caractérisée en ce que la résine liante a un poids moléculaire moyen en nombre de 600 à 100 000 et contient 25 % en moles ou plus d'un composé hydroxylé aromatique dans son monomère constituant, et en ce que la résine hydrophile est une résine de polyamine et/ou une résine de polyimine ayant un poids moléculaire moyen en nombre de 600 à 100 000 et contient 25 % en moles ou plus d'un composé aminé dans le monomère constituant, la résine liante étant au moins l'une des (A1) à (A6) suivantes :
   (A1) Une résine à base d'époxy, obtenue par la réaction d'une résine époxy du type bisphénol et/ou d'une résine époxy du type résorcine, avec une amine secondaire, et ne contenant substantiellement pas de groupe époxy ;
   (A2) Une résine d'ester époxydé obtenue par la réaction d'une résine époxy du type bisphénol et/ou d'une résine époxy du type résorcine, avec un acide dicarboxylique, et ne contenant substantiellement pas de groupe époxy ;
   (A3) Une résine d'uréthane obtenue par la réaction d'une résine du groupe desdites résines (A1) et/ou (A2), dans laquelle un groupe hydroxyle primaire est introduit par un composé alcanolamine ayant un groupe hydroxyle primaire, avec un composé polyisocyanate partiellement bloqué ;
   (A4) Une résine polyphénoxy ;
   (A5) Une résine phénolique du type Novolaque ;
   (A6) Une résine polyalcénylphénolique ;
   la résine hydrophile étant au moins l'une des (B11), (B12), (B13), (B21), (B22) et (B23) suivantes :
   (B11) Un copolymère à base de résine acrylique, contenant 25 % en moles ou plus d'un monomère contenant un groupe amino ;
   (B12) Une résine obtenue par la réaction d'un composé époxy polyfonctionnel avec un composé amine primaire ou secondaire ;
   (B13) Une polyéthylèneimine ;
   (B21) Une résine de polyamine greffée obtenue en polymérisant supplémentairement ladite (B11) par greffage avec un monomère $\alpha,\beta$-éthylénique insaturé ;
   (B22) Une résine de polyamine greffée obtenue en greffant sur ladite (B11) une résine ayant de la compatibilité avec une résine liante et/ou une résine liante ;
   (B23) Une résine de polyamine greffée obtenue en greffant sur ladite (B12) une résine ayant de la compatibilité avec une résine liante et/ou une résine liante ;
   le rapport de mélange de la résine hydrophile par rapport à la résine liante étant 10 à 150:100 en poids, et le rapport de mélange des particules de silice par rapport à la résine liante étant 5 à 150:100 en poids.

2. Composition de revêtement pour matériau métallique prérevêtu selon la revendication 1, dans laquelle le diamètre moyen des particules primaires de la silice granulaire fine est 1 à 100 nm.

3. Composition de revêtement pour matériau métallique prérevêtu selon la revendication 1 ou 2, dans laquelle un lubrifiant est inclus.

4. Composition de revêtement pour matériau métallique prérevêtu selon l'une quelconque des revendications 1 à 3, dans laquelle un agent durcissant est inclus.